# EUROPÄISCHE PATENTSCHRIFT

(11) **EP 1 670 562 B1**
(45) Veröffentlichungstag und Bekanntmachung des Hinweises auf die Patenterteilung: **30.01.2008**
(21) Anmeldenummer: 04790102.0
(22) Anmeldetag: 04.10.2004
(51) Int. Cl.: B01D 11/04, B01D 61/02, C10G 21/28, C10G 73/02

(54) **MEMBRANVERFAHREN ZUR ABTRENNUNG VON LÖSUNGSMITTELN AUS ÖL-HALTIGEN LÖSUNGEN UND SUSPENSIONEN**
MEMBRANE METHOD FOR SEPARATING SOLVENTS FROM OIL-CONTAINING SOLUTIONS AND SUSPENSIONS
PROCEDE A MEMBRANE POUR LA SEPARATION DE SOLVANTS DE SOLUTIONS ET SUSPENSIONS CONTENANT DU PETROLE

(30) Priorität: 08.10.2003 DE 10347285
(43) Veröffentlichungstag der Anmeldung: 21.06.2006
(73) Patentinhaber: Uhde GmbH, 44141 Dortmund (DE)
(72) Erfinder: STREICH, Thomas, 63755 Alzenau (DE); RAUSCHER, Marcus, 74952 Kirchberg (DE)
(74) Vertreter: Bausch, Thomas
(86) Internationale Anmeldenummer: PCT/EP2004/011042
(87) Internationale Veröffentlichungsnummer: WO 2005/039728

(56) Entgegenhaltungen:
- EP-A- 0 125 907
- EP-A- 1 323 460

## Beschreibung

Die Erfindung betrifft ein Verfahren zur Abtrennung von Lösungsmitteln aus Öl-haltigen Lösungen und Suspensionen bei der Schmierölherstellung mit Hilfe von lösungsmittelbeständigen, selektiven Nanofiltrationsmembranen, wobei als Membran eine Polyamidimid-Membran und als Lösungsmittel ein Dichlorethan/Dichlormethan-Gemisch eingesetzt wird.

Es ist allgemein bekannt, dass Membranprozesse in unterschiedlichen Prozessschritten im Bereich der Erdölverarbeitung (Wasserstoffrückgewinnung, Lösungsmittelrückgewinnung) eingesetzt und mit Membranverfahren Lösungsmittel aus Prozessströmen von Extraktionsprozessen in der Erdölraffination, insbesondere der Schmierölherstellung, entfernt werden können. Hierfür beispielhaft genannt seien die Schriften EP 0088458 A2, EP 0125 907 A1, US 4,510,047, US 5,240,591, US 5,360,530, WO 95/33019 und EP 0 771 585 A2. Einsatzbeispiele sind Verfahren im Anschluss an einen extraktiven Entaromatisierungsschritt nach der Abscheidersektion, wobei das Lösungsmittel in der Membraneinheit teilweise aus der aromatenreichen Extraktphase entfernt wird, bevor der verbleibende Strom einer thermischen Lösungsmittelrückgewinnung zugeführt wird, und die Abtrennung von Lösungsmittel aus prozessbedingten Mischungen, bestehend aus entparaffinierten Öl und Lösungsmittel einer Entparaffinierungssektion, wobei ein Teil des Lösungsmittels als Permeat bei tiefen Temperaturen in den Entparaffinierungsprozess zurückgeführt wird.

Hierbei werden eine Vielzahl von Lösungsmitteln eingesetzt, oft handelt es sich um chlorierte Kohlenwasserstoffe. Die Rückgewinnung von chlorierten Kohlenwasserstoffen stellt aufgrund des akuten Gesundheitsgefährdunspotentials der Lösungsmittel besondere Anforderungen an die Trenneinheiten. In bisherigen Membran-Trennverfahren wurden als Membranmaterialien vernetzte Polyimine, Polyamide, halogensubstituiertes Silicon, Celluloseacetat, Polyimide, (z.B. Matrimid 5218), Polysulfone, Polyethylen,- Polypropylen, Polyisobutylen, Polybutylen, Polybutadiene, Polystyrol, Silicon, PTFE, PVC, Polycarbonate und Polysilane vorgeschlagen bzw. verwendet.

Problematisch sind hierbei Wechselwirkungen der Lösung und vor allem der Lösungsmittel mit den Stoff- und Oberflächeneigenschaften der Membran, wobei tendenziell die Wechselwirkungen immer stärker werden, je kleiner die Strukturen sind. Somit bestand die Aufgabe der Erfindung darin, eine besonders vorteilhafte Membran-Lösungsmittel-Kombination zu finden, bei welcher die Wechselwirkungen positiv für das Gesamtverfahren sind.

Die Erfindung löst die Aufgabe dadurch, dass eine Nano-Filtrationsmembran aus Polyamidimid und ein spezielles Zweikomponenten-Lösungsmittel eingesetzt wird, welches im Wesentlichen aus Dichlorethan und Dichlormethan besteht.

Die Abtrennung des Lösungsmittels erfolgt dabei zunächst bis zur Löslichkeitsgrenze des Öls im Lösungsmittel. Eine weitere Aufkonzentrierung führt zur Bildung zweier Phasen, durch die eine Lösungsmittelabtrennung aus der öligen Suspension aber nicht beeinträchtigt wird.

Die Abtrennung von Lösungsmitteln, welche aus halogenierten Kohlenwasserstoffen mit niedrigem Molekulargewicht bestehen, aus Öl-haltigen Lösungen und Suspensionen bei der Schmierölherstellung, wird in dem erfindungsgemäßen Verfahren mittels einer lösungsmittelbeständigen, selektiven Membran (aus Polyamidimid) vorgenommen. Idealerweise liegen die Temperaturen bei der Trennung zwischen 100 und -30 °C, die Überströmgeschwindigkeit beträgt zwischen 0,5 und 10 m/s und die transmembrane Druckdifferenz zwischen Zuströmseite und Permeatseite liegt zwischen 1 und 50 bar. Weiterhin besteht das Lösungsmittel im Wesentlichen aus einer Mischung aus Dichlormethan und Dichlorethan und die Membran ist eine Nanofiltrations-Membran. Es zeigte sich überraschenderweise, dass in Gegenwart des Lösungsmittelgemisches aus Dichlormethan und Dichlorethan an der Polyamidimid-Membran eine sehr hohe Rückhaltung des Öls erfolgt.

Vorteilhafterweise besteht in dem Verfahren das Lösungsmittelgemisch aus Dichlormethan und Dichlorethan, wobei diese Fluide in im Wesentlichen gleichen Volumenanteilen vorliegen.

Eine weitere vorteilhafte Ausgestaltung des erfindungsgemäßen Verfahrens besteht darin, dass der Volumenanteil des Lösungsmittelgemisches in der gesamten flüssigen Phase im Bereich von 50 bis 95 % und idealerweise im Bereich von 75 bis 85 % liegt.

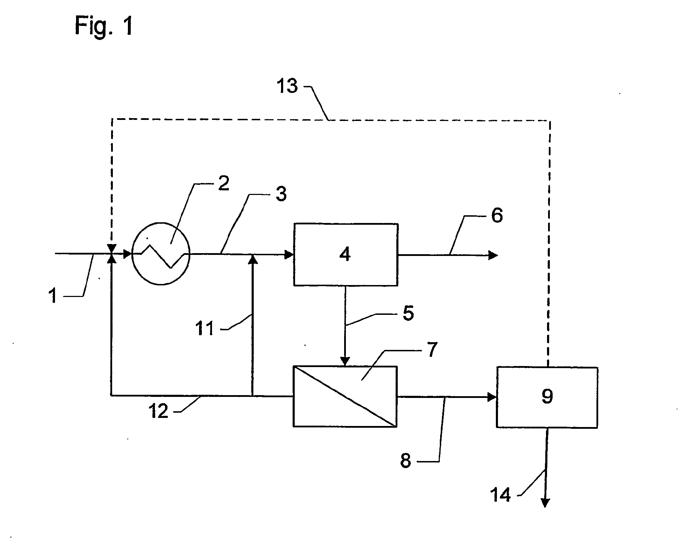

Das erfindungsgemäße Verfahren kann beispielsweise im Anschluss an einen extraktiven Entaromatisierungsschritt nach der Abscheidersektion eingesetzt werden, wobei das Lösungsmittel in der Membraneinheit teilweise aus der aromatenreichen Extraktphase entfernt wird, bevor der verbleibende Strom einer thermischen Lösungsmittelrückgewinnung zugeführt wird (siehe Fig. 1). Eine weitere Einsatzmöglichkeit des erfindungsgemäßen Verfahrens ist bei der Abtrennung von Lösungsmitteln aus prozessbedingten Mischungen, bestehend aus entparaffinierten Öl und Lösungsmittel einer Entparaffinierungssektion gegeben, wobei ein Teil des Lösungsmittels als Permeat bei tiefen Temperaturen in den Entparaffinierungsprozess zurückgeführt wird. In beiden Fälle wird die thermische Lösungsmittelrückgewinnungseinheit und ggf. die Kälteeinheit zur Kühlung der Lösemittel auf Prozesstemperatur durch die hohe Selektivität der Membran entlastet.

Die Erfindung wird nachfolgend anhand von Versuchseinstellungen und zwei Verfahrensbeispielen näher erläutert, wobei das erfindungsgemäße Verfahren aber nicht auf diese beispielhafte Ausführungsform beschränkt ist.

Wie in Fig. 1 dargestellt wird der Feedstrom 1 einer Kühleinheit 2 zugeführt. Über Leitung 3 wird die gekühlte Lösung einer Filterstufe 4 zur Abtrennung der filterbaren Wachsanteile zugeleitet. Der Filterrückstand wird im Anschluss über Leitung 6 der weitergehenden Verarbeitung zugeführt. Das Filtrat aus der Filterstufe 4 wird über den Leitungsweg 5 in die Membraneinheit 7 gefördert. Der Hauptanteil des gereinigten Lösungsmittels verlässt die Membraneinheit 7 permeatseitig über die Leitungen 11 wieder und wird direkt vor die Filtereinheit 4 (Leitungsweg 11) oder vor die Kühleinheit 2 (Leitungsweg 12) geleitet.

Das nur noch sehr gering mit Lösungsmittel beladene Schmieröl verlässt retentatseitig die Membraneinheit 7 und wird zur weitergehenden Abtrennung der Lösungsmittelanteile einer Verdampfungseinheit 9 zugeführt. Das dampfförmige Lösungsmittel aus der Verdampfungseinheit 9 wird in den Feedstrom 1 zurückgeführt und das lösungsmittelfreie Schmieröl verlässt die Verdampfungseinheit 9 über Leitung 14.

Nachstehend sind einige Versuchseinstellungen beispielhaft beschrieben und deren Ergebnisse sowie die Versuchsparameter in der nachfolgenden Tabelle zusammengefasst.

### Versuch 1: Polyamidimid-Membran

Eine Nanofiltrationsmembran aus Polyamidimid wurde bei einer Strömungsgeschwindigkeit von 2 m/s, einer Temperatur von 20 °C und einer transmembranen Druckdifferenz von 20 bar eingesetzt. Die zu trennende Lösung bestand aus dem Lösungsmittelgemisch Dichlormethan und Dichlorethan im Volumenverhältnis 1:1 sowie einem mittleren Neutralöl (450-650 g/mol), das im Volumenverhältnis von 4:1 zu dem Lösungsmittelgemisch stand. Die Membran zeigte nach 2 Wochen Einsatz keine wesentliche Verschlechterung der Trennselektivität und des Permeatfluxes.

### Versuch 2: Komposite Membran

Eine Nanofiltrationsmembran aus einem Kompositmaterial wurde bei einer Strömungsgeschwindigkeit von 2 m/s, einer Temperatur von 20 °C und einer transmembranen Druckdifferenz von 20 bar eingesetzt. Die zu trennende Lösung bestand aus dem Lösungsmittelgemisch Dichlormethan und Dichlorethan im Volumenverhältnis 1:1 sowie einem mittleren Neutralöl (450-650 g/mol), das im Volumenverhältnis von 4:1 zu dem Lösungsmittelgemisch stand.

### Versuch 3: Torlon® Membran und leichtes Neutralöl

Eine Nanofiltrationsmembran aus Polyamidimid wurde bei einer Strömungsgeschwindigkeit von 2 m/s, einer Temperatur von 20 °C und einer transmembranen Druckdifferenz von 20 bar eingesetzt. Die zu trennende Lösung bestand aus dem Lösungsmittelgemisch Dichlormethan und Dichlorethan im Volumenverhältnis 1:1 sowie einem leichten Neutralöl (250-450 g/mol), das im Volumenverhältnis von 4:1 zu dem Lösungsmittelgemisch stand.

### Versuch 4: Polyamidimidmembran und alternatives Lösungsmittel

Eine Nanofiltrationsmembran aus einem Polyamidimid wurde bei einer Strömungsgeschwindigkeit von 2 m/s, einer Temperatur von 12 °C und einer transmembranen Druckdifferenz von 10 bar eingesetzt. Die zu trennende Lösung bestand aus dem Lösungsmittel Diisopropylether und einem mittleren Neutralöl (450-650 g/mol), das im Volumenverhältnis von 7:1 zu dem Lösungsmittelgemisch stand.

### Versuch 5: Keramische Membran

Eine Nanofiltrationsmembran aus einem mit TiO₂ beschichteten Al₂O₃-Träger mit einem Porendurchmesser von 0,5 nm wurde bei einer Strömungsgeschwindigkeit von 0,5 m/s, einer Temperatur von 20 °C und einer transmembranen Druckdifferenz von 5 bar eingesetzt. Die zu trennende Lösung bestand aus dem Lösungsmittel Toluol und einem mittleren entparaffinierten Neutralöl, das im Volumenverhältnis von 4:1 zu dem Lösungsmittel stand.

**Tabelle der Versuchsparameter**

| Versuch | Membran | Lösungsmittel | Neutralöl | Verdünnung [vol.LM/vol.Öl] | Δ p [bar] | [°C] |
|---|---|---|---|---|---|---|
| 1 | Polyamidimid | Dichlormethan, Dichlorethan | Mittleres Neutralöl | 4:1 | 20 | 20 |
| 2 | Composit | Dichlormethan, Dichlorethan | Mittleres Neutralöl | 4:1 | 20 | 20 |
| 3 | Polyamidimid | Dichlormethan, Dichlorethan | Leichtes Neutralöl | 4:1 | 20 | 20 |
| 4 | Polyamidimid | Diisopropyl-ether | Mittleres Neutralöl | 7:1 | 10 | 12 |
| 5 | Keramische Membran TiO₂-Al₂O₃ | Toluol | Mittleres Neutralöl | 4:1 | 5 | 20 |

**Tabelle der Versuchsergebnisse**

| Versuch | Cross Flow [m/s] | Permeat Flux [l/m²h] | Rückhaltung 1-x_{P}/x_{F} |
|---|---|---|---|
| 1 | 2 | 60 | 99 |
| 2 | 2 | 40 | 70 |
| 3 | 2 | 80 | 92 |
| 4 | 2 | 30 | 15 |
| 5 | 0,5 | 15 | 40 |

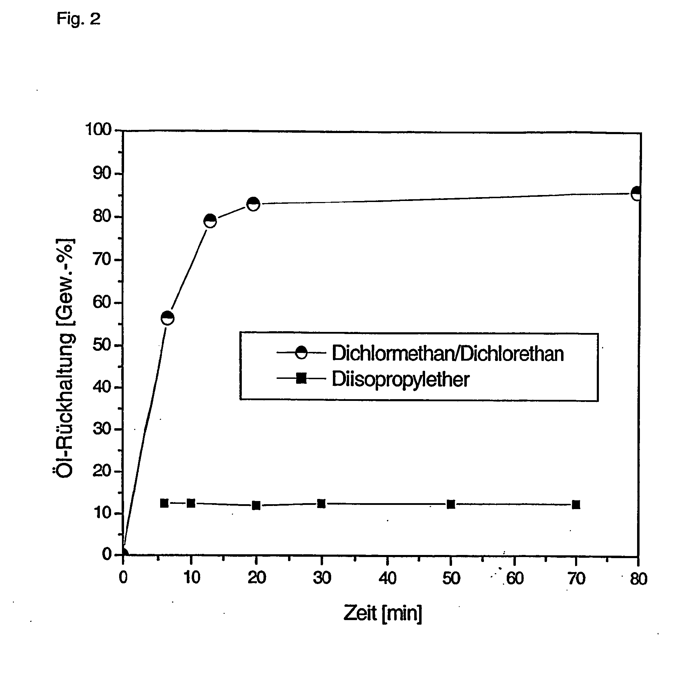

Wie in Fig. 2 gemäß den Tabellen dargestellt, zeigte sich überraschenderweise, dass in Gegenwart des Lösungsmittelgemisches aus Dichlormethan und Dichlorethan an der Polyamidimid-Membrane während einer Einlaufphase eine zunehmend verbesserte Rückhaltung des Öls zu beobachten ist. Ein vergleichbarer Einlaufeffekt mit dem eine große Verbesserung der Ölrückhaltung erreicht wird, wurde bei einem anderen Lösungsmittel, z.B. Diisopropylether, nicht beobachtet. Da sich die Lösungsmittelmoleküle Dichlorethan und Diisopropylether in ihrem Molekulargewicht (99,0 und 102,2 g/mol) nicht wesentlich unterscheiden, kann neben der reinen Molekülsiebung eine Wechselwirkung zwischen diesen Lösungsmittelmolekülen und der Membran angenommen werden. Die Selektivität der Membran konnte deutlich erhöht werden.

## Patentansprüche

1. Verfahren zur Abtrennung von Lösungsmitteln, welche aus halogenierten Kohlenwasserstoffen mit niedrigem Molekulargewicht bestehen, aus Öl-haltigen Lösungen und Suspensionen bei der Schmierölherstellung mittels einer lösungsmittelbeständigen, selektiven Membran, wobei die Trennung bei Temperaturen zwischen 100 und -30 °C durchgeführt wird, die Überströmgeschwindigkeit zwischen 0,5 und 10 m/s beträgt, die transmembrane Druckdifferenz zwischen Zuströmseite und Permeatseite zwischen 1 und 50 bar liegt, und das Lösungsmittel im Wesentlichen aus einer Mischung aus Dichlormethan und Dichlorethan besteht,
**dadurch gekennzeichnet, dass**
die Membran eine Nanofiltrations-Membran aus Polyamidimid ist.

2. Verfahren nach Anspruch 1,
**dadurch gekennzeichnet, dass**
das Lösungsmittelgemisch aus Dichlormethan und Dichlorethan besteht und diese Fluide in im Wesentlichen gleichen Volumenanteilen vorliegen.

3. Verfahren nach einem der beiden Ansprüche 1 oder 2,
**dadurch gekennzeichnet, dass**
der Volumenanteil des Lösungsmittelgemisches in der gesamten flüssigen Phase im Bereich von 50 bis 95 % und idealerweise im Bereich von 75 bis 85% liegt.

## Claims

1. Process for the separation of solvents which consist of halogenated hydrocarbons with low molecular weight, to eliminate them from oil-bearing solutions and suspensions obtained in the lube oil production, using a solvent-resistant selective membrane, the separation taking place at temperatures from 100 to -30°C, the overflow velocity ranging from 0.5 to 10 m/s, the pressure difference across the membrane between the feed side and permeate side amounting to 1 to 50 bars, the said solvent essentially consisting of a mixture of dichloromethane and dichloroethane,
**characterised in that**
the membrane is a nano-filtration element made from polyamidimide.

2. Process in accordance with Claim 1,
**characterised in that**
the solvent mixture consists of dichloromethane and dichloroethane and that the said fluids are present in essentially equal volumetric portions.

3. Process in accordance with any of the preceding Claims 1 or 2,
**characterised in that**
the volumetric portion of the solvent mixture ranges from 50 to 95%, in the ideal version from 75 to 85%, during the entire liquid phase.

## Revendications

1. Procédé pour la séparation de solvants, qui consistent en des hydrocarbures halogénés, d'un poids moléculaire bas, pour les éliminer des solutions ou suspensions oléagineuses obtenues dans la production d'huiles, moyennant une membrane sélective résistante au solvant respectif, la dite séparation ayant lieu à une température de 100 à -30°C, le débit de déversement étant de 0,5 à 10 m/s, la pression à travers la membrane, entre le côté d'amenée et le côté de perméabilité, étant de 1 à 50 bars, le dit solvant étant essentiellement composé d'un mélange de dichlorométhane et de dichloroéthane,
**caractérisé en ce que**
un élément à nano-filtration fait en polyamidimide constitue la dite membrane.

2. Procédé selon la revendication No. 1,
**caractérisé en ce que**
le mélange de solvant consiste en dichlorométhane et dichloroéthane et que les dits fluides sont présents dans des concentrations volumétriques essentiellement égales.

3. Procédé selon l'une des revendications Nos. 1 ou 2,
**caractérisé en ce que**
les portions volumétriques du mélange de solvant se situent entre 50 et 95 % pendant la phase liquide entière, dans la version idéale entre 75 et 85 %.
